# EUROPÄISCHE PATENTSCHRIFT

(11) **EP 0 886 832 B1**
(45) Veröffentlichungstag und Bekanntmachung des Hinweises auf die Patenterteilung: **29.09.1999**
(21) Anmeldenummer: 97914160.3
(22) Anmeldetag: 03.03.1997
(51) Int. Cl.: G06K 7/08

(54) **MAGNETKOPFANORDNUNG ZUM ABTASTEN EINES MAGNETSTREIFENS**
MAGNETIC HEAD ARRANGEMENT FOR SCANNING A MAGNETIC STRIP
DISPOSITIF A TETE MAGNETIQUE POUR LA LECTURE D'UNE BANDE MAGNETIQUE

(30) Priorität: 13.03.1996 DE 19609886
(43) Veröffentlichungstag der Anmeldung: 30.12.1998
(73) Patentinhaber: Siemens Nixdorf Informationssysteme AG, 33106 Paderborn (DE)
(72) Erfinder: DUESTERHUS, Richard, D-33106 Paderborn (DE)
(74) Vertreter: Epping, Wilhelm, Dr.-Ing.
(86) Internationale Anmeldenummer: DE9700383
(87) Internationale Veröffentlichungsnummer: WO9734248

(56) Entgegenhaltungen:
- DE-A- 2 741 473
- US-A- 5 148 341
- PATENT ABSTRACTS OF JAPAN vol. 010, no. 119 (P-453), 6.Mai 1986 & JP 60 247871 A (FUJITSUU KIDEN KK), 7.Dezember 1985,

## Beschreibung

Die Erfindung betrifft eine Magnetkopfanordnung zum Abtasten eines auf einem ebenen Träger angeordneten Magnetstreifens, umfassend ein Gehäuse mit einer der abzutastenden Magnetstreifenfläche entsprechenden Öffnung, einen Schlitten, der in dem Gehäuse linear verstellbar geführt ist und an dem ein Magnetkopf um zwei zueinander senkrechte Achsen schwenkbar gelagert ist, und einen Spindeltrieb zum Verstellen des Schlittens entlang der Öffnung. Eine solche Anordnung ist aus der US-A-5 148 341 bekannt.

Eine derartige Magnetkopfanordnung kann beispielsweise als eigenständige Baugruppe in einem Gerät eingebaut sein, in das Sparbücher eingeführt werden, die auf ihrem Außenumschlag einen Magnetstreifen tragen. Die derzeit bekannten Baugruppen der vorstehend genannten Art bestehen aus einer großen Anzahl von Teilen, die sorgfältig hergestellt, montiert und justiert werden müssen, um ein präzises Lesen und Schreiben von Daten mittels des Magnetkopfes zu ermöglichen. Die herkömmlichen Baugruppen dieser Art verursachen daher hohe Herstellungskosten.

Der Erfindung liegt die Aufgabe zugrunde, eine Magnetkopfanordnung der vorstehend genannten Art anzugeben, die bei gleicher Gebrauchsgenauigkeit einfacher, schneller und preiswerter herzustellen und zu montieren ist.

Diese Aufgabe wird erfindungsgemäß dadurch gelöst, daß das Gehäuse in einer die Spindelachse enthaltenden und senkrecht zur Abtastfläche gerichteten Ebene in zwei jeweils einstückige Hälften unterteilt ist, in denen jeweils Lagerschalen zur Lagerung des Spindeltriebes ausgebildet sind, daß der mit der Spindel in Gewindeeingriff stehende Schlitten einerseits an einer an dem Gehäuse parallel zur Spindel gelagerten Führungsstange und andererseits an einer in dem Gehäuse ausgebildeten Längsführung geführt ist und daß der Magnetkopf in einem Rahmen befestigt ist, der an einer Schwinge um eine erste Achse schwenkbar gelagert ist, wobei die Schwinge um eine zur ersten Achse senkrechte zweite Achse an dem Schlitten schwenkbar gelagert ist.

Der Magnetkopf kann in dem Rahmen vormontiert, beispielsweise eingeklebt oder mit einer nicht dargestellten Rastfeder eingeklipst werden. Der Rahmen selber kann mit sehr präzisen Außenabmessungen hergestellt und daher einfach und rasch montiert werden, ohne daß weitere Justierungen des Magnetkopfes erforderlich sind. Der Rahmen, die Schwinge und der Schlitten können ebenso wie die Gehäusehälften als einstückige Kunststoffteile einfach, maßgenau und preiswert hergestellt werden. Die Montage dieser wenigen Teile ist ebenfalls sehr einfach. Eine Justierung der Teile relativ zueinander ist in der Regel nicht erforderlich. Im Gegensatz zu der bisher bekannten Baugruppe, bei welcher der Schlitten an der Spindel selber geführt war, ist bei der erfindungsgemäßen Lösung der Schlitten an dem Gehäuse bzw. einem gehäusefesten Teil (Führungsstange) geführt, während die Spindel nur noch die Aufgabe des Linearantriebes hat. Dadurch können die Anforderungen an die Präzision der Spindel herabgesetzt und somit Kosten gesenkt werden. Ferner entfällt die bisher übliche präzise Justierung der Spindel in axialer Richtung mit Hilfe von speziellen Axiallagern.

Die Führung des Schlittens am Gehäuse kann auf einfache Weise dadurch erfolgen, daß das Gehäuse eine Führungsbahn hat, an der mit dem Schlitten verbundene Führungsnasen geführt sind.

Vorzugsweise ist der den Magnetkopf umgebende Rahmen zwischen zwei Lagerschenkeln der Schwinge gelagert, wobei an dem Rahmen oder den Lagerschenkeln Lagerspitzen ausgebildet sind, die in am jeweils anderen Teil (Lagerschenkel oder Rahmen) ausgebildete Vertiefungen eingreifen. Die Vertiefungen und die Lagerspitzen können jeweils bei der Herstellung des betreffenden Teiles mit ausgebildet oder angeformt werden. Die Montage kann auf einfache Weise dadurch erfolgen, daß der Rahmen zwischen die beiden Lagerschenkel unter elastischer Auslenkung derselben eingeschoben wird, bis die Spitzen in die Vertiefungen einrasten. Um einer Materialermüdung vorzubeugen, die zu einem Spiel in der Magnetkopflagerung führen könnte, sind die Lagerschenkel vorzugsweise in Richtung auf den Rahmen vorgespannt.

In ähnlicher Weise kann die Schwinge an dem Schlitten montiert werden. Hierzu hat bei einer bevorzugten Ausführungsform der Erfindung die Schwinge zwei Arme, mit denen sie zwischen zwei Schenkel einer an dem Schlitten ausgebildeten Lagergabel eingreift, wobei an den Armen oder den Gabelschenkeln Lagerspitzen ausgebildet sind, die in an dem jeweils anderen Teil (Gabelschenkel bzw. Arme) ausgebildete Vertiefungen eingreifen. Auch hier ist es zweckmäßig, wenn die Arme der Schwinge in ihre Eingriffstellung mit den Gabelschenkeln vorgespannt sind, um zu verhindern, daß aufgrund einer Materialermüdung ein Spiel in dem so geschaffenen Lager auftritt.

Die Schwinge sorgt dafür, daß der Magnetkopf in Richtung auf den Magnetstreifen bewegt werden kann, so daß der Magnetkopf zuverlässig an dem Magnetstreifen anliegt. Dabei sorgt die Lagerung des Magnetkopfes in der Schwinge dafür, daß der Magnetkopf Unebenheiten des Magnetstreifens folgen kann. Vorzugsweise ist die Schwinge dabei in Richtung auf die abzutastende Fläche vorgespannt, wobei der Schwenkweg der Schwinge durch Anschläge begrenzt ist.

Um zu verhindern, daß der Magnetstreifenträger (Sparbuch) beim Einziehen in die Bearbeitungsstation an die die Öffnung begrenzende Kante des Gehäuses anstößt, ist der Magnetkopf in seiner Ruhestellung an den Endlagen des Stellweges in das Gehäuse zurückgezogen. Zwischen diesen beiden Endlagen jedoch muß der Magnetkopf durch die Öffnung des Gehäuses soweit hervortreten, daß er zur Anlage an dem Magnetstreifen kommen kann. Hierzu ist erfindungsgemäß an mindestens einer der parallel zur Spindelachse gerichteten Seiten der Schwinge ein Führungsansatz ausgebildet, der mit einer in einer der Gehäusehälften ausgebildeten Steuerkurve zusammenwirkt derart, daß die Schwinge bei der Verstellung des Schlittens zu Beginn des Stellweges von dem Schlitten weg und am Ende des Stellweges zum Schlitten hin geschwenkt wird.

Um eine Verschmutzung des Magnetkopfes so gering wie möglich zu halten, ist zweckmäßigerweise die Öffnung durch einen Verschlußschieber verschließbar, der mit dem Schlitten gekoppelt ist und somit zusammen mit dem Schlitten verstellt werden kann.

Ein einfache Montage des Schlittens an dem Spindeltrieb erhält man dadurch, daß am Schlitten zum Eingriff mit dem Spindelgewinde bestimmte Gewindestegabschnitte ausgebildet sind, die sich jeweils über weniger als 180° erstrekken. Somit braucht der Schlitten nur auf die Gewindespindel aufgesetzt zu werden.

Weitere Merkmale und Vorteile der Erfindung ergeben sich aus der folgenden Beschreibung, die in Verbindung mit den beigefügten Zeichnungen die Erfindung anhand eines Ausführungsbeispieles erläutert. Es zeigen:
- Figur 1: eine perspektivische Explosionsdarstellung der erfindungsgemäßen Magnetkopfanordnung mit den geöffneten Gehäusehälften, dem Spindeltrieb und der mit diesem verbundenen Schlittengruppe,
- Figur 2: eine vergrößerte perspektivische Darstellung der Schlittengruppe allein von der anderen Schlittenseite,
- Figur 3: den Schlitten allein in einer perspektivischen Darstellung schräg von unten und
- Figur 4: eine perspektivische Teilansicht der in Figur 1 von außen zu sehenden Gehäusehälfte von innen mit der Schlittenbaugruppe.

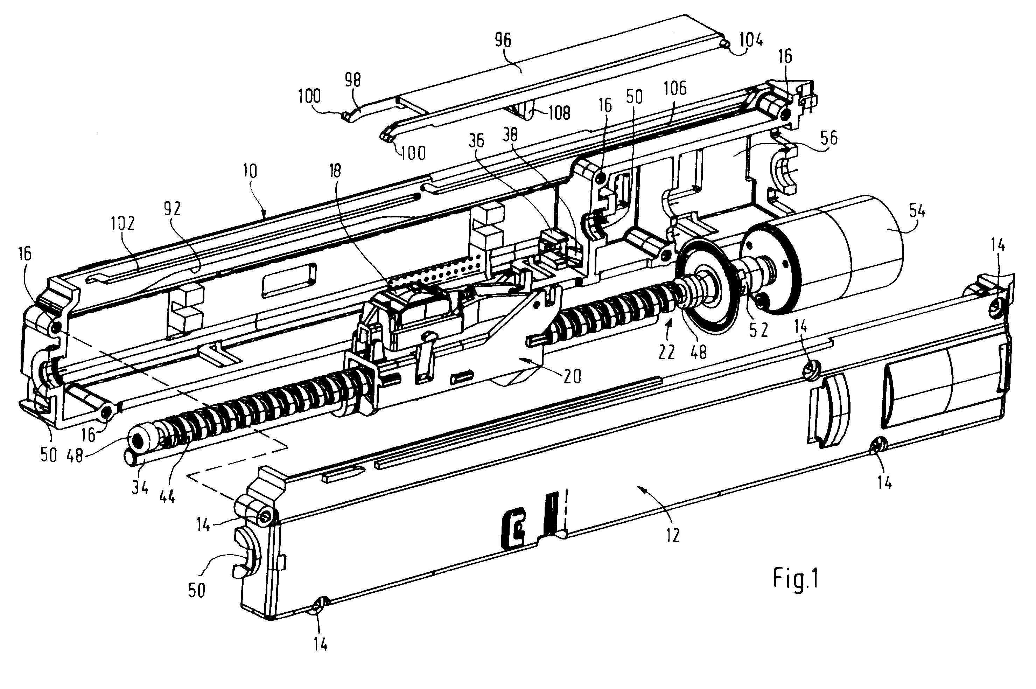

In Figur 1 erkennt man zwei Gehäusehälften 10 und 12, die zu einem kompletten länglich quaderförmigen Gehäuse zusammengesetzt und mit Hilfe von nicht dargestellten Schrauben miteinander verbunden werden können, welche Bohrungen 14 in der Gehäusehälfte 12 durchsetzen und in Gewindebohrungen 16 in der Gehäusehälfte 10 eingreifen.

Das Gehäuse 10, 12 dient zur Aufnahme einer einen Magnetkopf 18 tragenden allgemein mit 20 bezeichneten Schlittenbaugruppe. die innerhalb des Gehäuses 10, 12 in Längsrichtung desselben verschiebbar geführt und mit Hilfe eines allgemein mit 22 bezeichneten Spindeltriebes verstellbar ist.

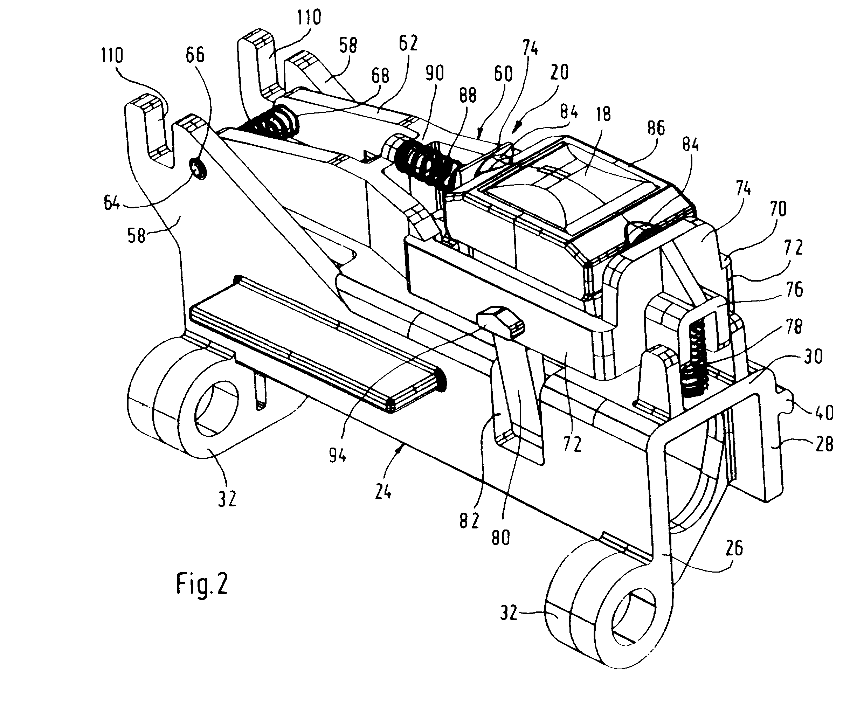

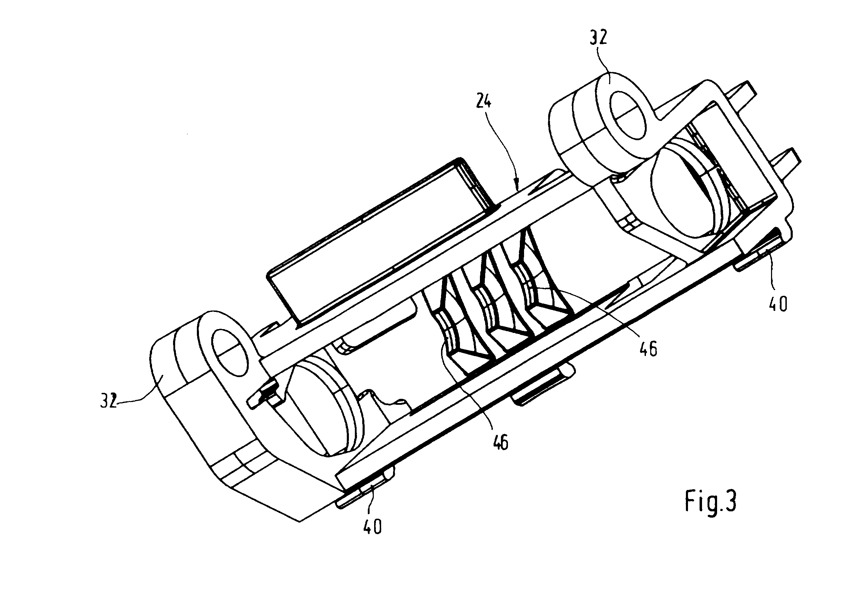

Die Schlittenbaugruppe umfaßt gemäß den Figuren 2 bis 4 einen Schlitten 24 mit zwei zueinander parallelen Seitenwänden 26 und 28, die durch einen Quersteg 30 miteinander verbunden sind. Am unteren Rand der Seitenwand 26 sind zwei Führungsösen 32 angeordnet, mit denen der Schlitten 24 an einer Führungsstange 34 (Figur 1) gleitend verschiebbar geführt ist. Die Führungsstange 34 wird in zwei Gabeln 36 in der Gehäusehälfte 10 (in Figur 1 ist nur eine dieser Gabeln zu erkennen) eingesetzt und in der eingesetzten Stellung durch Federzungen 38 gehalten, die beim Einschieben der Führungsstange 34 zunächst zur Seite gedrückt werden und nach dem Einsetzen der Führungsstange 34 in ihre Ruhestellung zurückschnappen.

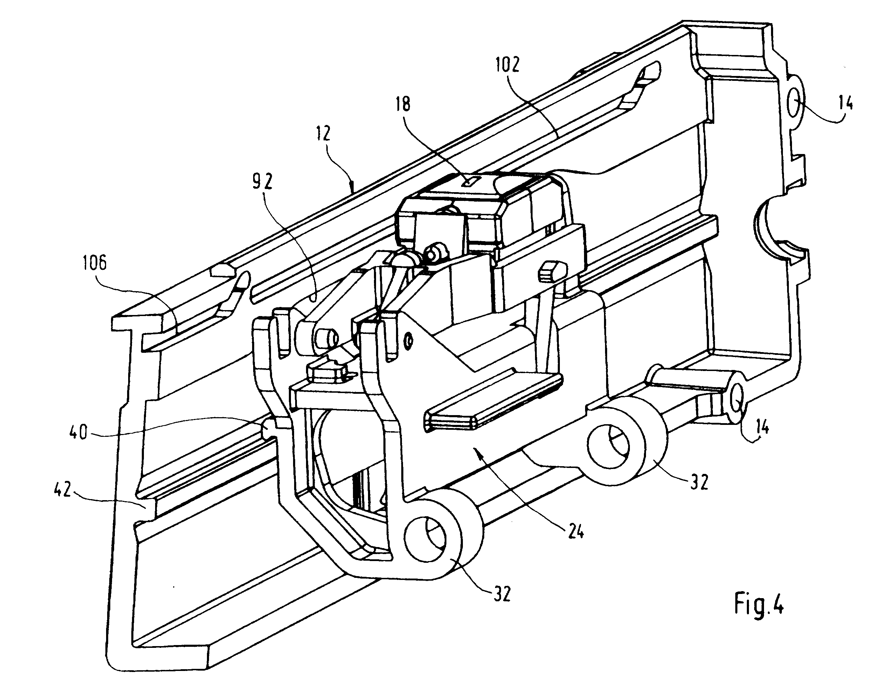

An der Außenseite der anderen Seitenwand 28 des Schlittens 24 sind drei Führungsnasen 40 ausgebildet, die zur Anlage an der Ober- und Unterseite einer Führungsschiene 42 bestimmt sind, die an der Innenseite der Gehäusehälfte 12 ausgebildet ist, wie dies Figur 4 zeigt.

Durch den von den Seitenwänden 26, 28 und dem Quersteg 30 U-förmig begrenzten Hohlraum des Schlittens 24 verläuft die Gewindespindel 44 des Spindeltriebes 22. An der Innenseite des Quersteges 30 sind dabei drei Gewindestegabschnitte 46 ausgebildet, die sich über einen Winkel von weniger als 180° erstrecken und in die Gewindegänge der Gewindespindel 44 eingreifen, sodaß der Schlitten 24 in Gewindeeingriff mit der Gewindespindel 44 steht.

Auf die Gewindespindel 44 sind Lager 48 aufgesteckt, die beim Zusammenfügen der beiden Gehäusehälften 10 und 12 in in den Gehäusehälften 10 und 12 ausgebildeten Lagerhalbschalen 50 gehalten werden.

Die Gewindespindel 44 ist über eine Klauenkupplung 52 mit einem Gleichstrommotor 54 verbunden, der in einer Gehäusekammer 56 aufgenommen wird. Bei einer Drehung der Gewindespindel 44 durch den Motor 54 wird also der Schlitten 24 in Spindellängsrichtung verstellt, wobei er auf der Führungsstange 34 bzw. der Führungsleiste 42 geführt wird.

An seinem einen Ende hat der Schlitten 24 in Verlängerung der beiden Seitenwände 26 und 28 über den Quersteg 30 hinaus zwei eine Lagergabel bildende Schenkel 58, zwischen denen eine allgemein mit 60 bezeichnete Schwinge um eine senkrecht zur Schlittenlängsrichtung 24 gerichtete Achse schwenkbar gelagert ist. Die gelenkige Verbindung mit der Schwinge 60 erfolgt über zwei freie Arme 62 der Schwinge 60, die zwischen die Schenkel 58 eingreifen und auf ihren den Schenkeln 58 zugewandten Seiten Lagerspitzen oder Lagerzapfen 64 tragen, die in Vertiefungen oder Löcher 66 in den Schenkeln 58 eingreifen. Da der Schlitten 24 und die Schwinge 60 jeweils aus Kunststoff hergestellt werden, kann die Schwinge durch leichtes Zusammendrücken der Arme 62 zwischen die Schenkel 58 eingeführt werden, bis die Lagerspitzen 64 in die Löcher 66 einrasten. Um zu vermeiden, daß durch ein Materialermüdung das Lagerspiel zwischen der Schwinge 60 und dem Schlitten 24 zu groß wird, werden die beiden Arme 62 durch eine zwischen ihnen angeordnete Schraubendruckfeder 68 gegen die Schenkel 58 gespannt.

Der mit den Armen 62 verbundene vordere Teil der Schwinge 60 besteht aus einem kastenförmigen Rahmen 70 mit Seitenwänden 72 und Stirnwänden 74. An der Außenseite der der Schwingenschwenkachse fernen Stirnwand 74 ist eine Federaufnahme 76 ausgebildet, in der eine Schraubendruckfeder 78 angeordnet ist, die sich an der Oberseite des Quersteges 30 abstützt und die Schwinge 60 von dem Quersteg 30 wegdrückt. Um die Schwinge seitlich zu stabilisieren und den Schwenkweg der Schwinge 60 zu begrenzen, sind an den dem Schlitten 24 zugewandten Flächen der Seitenwände 72 senkrecht nach unten abstehende Zungen 80 ausgebildet, die in Aussparungen 82 in der jeweiligen Seitenwand 26 bzw. 28 eingreifen und an ihren freien Enden jeweils eine nicht dargestellte nach innen weisende Anschlagnase tragen, die beim Versuch, die Schwinge 60 von dem Quersteg 30 vollständig abzuheben, an der Innenseite des Quersteges 30 hängen bleibt. Bei der Montage der Schwinge 60 an dem Schlitten 24 werden diese Zungen zunächst in die Öffnungen 82 von oben her eingeführt, federnd elastisch ausgelenkt und schnappen dann wieder nach innen, wenn die Nasen an den Zungen 80 vollständig in die Öffnungen 82 eingetreten sind.

Der kastenartige Rahmen 70 der Schwinge dient zur Aufnahme des Magnetkopfes 18. Dieser ist in einem Magnetkopfrahmen 86 verklebt oder vergossen. Der rechteckige Magnetkopfrahmen 86 hat an zwei einander gegenüberliegenden Rechteckseiten Lageransätze 84 mit nicht dargestellten Lagerspitzen, welche in ebenfalls in den Figuren nicht erkennbare Vertiefungen an den einander zugewandten Flächen der Stirnwände 74 eingreifen, sodaß der Magnetkopfrahmen 86 und damit der Magnetkopf 18 um eine zur Schwingenschwenkachse senkrechte Achse schwenkbar in dem kastenförmigen Rahmen 70 der Schwinge 60 gelagert ist. Um wiederum zu vermeiden, daß durch eine Materialermüdung ein Spiel in der Lagerung des Magnetkopfrahmens 86 auftritt, wird die der Schwingenschwenkachse nahe Stirnwand 74 durch eine Schraubendruckfeder 88, die sich an einer die beiden Arme 62 miteinander verbindenden Querwand 90 abstützt, in Richtung auf die andere Stirnwand 74 vorgespannt.

Die vorstehende Beschreibung der Schlittenbaugruppe 20 zeigt, daß die Schlittenbaugruppe selbst, abgesehen von den drei Schraubendruckfedern 68, 78, 88, nur aus drei über Rast- oder Klipsverbindungen miteinander verbundenen Teilen besteht, die alle für sich als Spritzgußteile aus Kunststoff hergestellt und außerordentlich einfach montiert werden können. Eine Justierung nach der Montage ist nicht erforderlich.

Wenn die beiden Gehäusehälften 10 und 12 nach dem Einlegen der Schlittenbaugruppe 20 und des Spindeltriebes 22 zusammengefügt und das Gehäuse somit geschlossen wird, verbleibt eine streifenförmige Öffnung an der Gehäuseoberseite, durch welche der Magnetkopf 18 hindurchtreten kann. Damit der Magnetkopf bei dem Einschieben des Magnetstreifenträgers nicht beschädigt wird, wird der Magnetkopf 18 in den Endstellungen des Schlittens 24 jeweils in Richtung auf den Quersteg 30 des Schlittens 24 verschwenkt. Diese Schwenkbewegung wird durch eine an der jeweiligen Innenwand der Gehäuseteile 10 und 12 ausgebildete Steuerkurve 92 gesteuert, unter die jeweils ein an der Außenseite der Seitenwände 72 angeordneter Zapfen 94 greift. Wie man in Figur 1 erkennt, senkt sich die Steuerkurve 92 an ihren Enden jeweils nach unten, sodaß bei Annäherung des Schlittens 24 an seine jeweilige Endstellung die Schwinge 60 und damit der Magnetkopf 18 nach unten gedrückt werden.

Um zu verhindern, daß der Magnetstreifenträger (Sparbuch) beim Einziehen in die Bearbeitungsstation an die die Öffnung begrenzende Kante des Gehäuses anstößt, ist ein Verschlußschieber 96 vorgesehen, der die streifenförmige Öffnung des Gehäuses überdeckt, wenn sich die Schlittenbaugruppe 20 in der in der Figur 1 linken Endstellung, d.h. der dem Motor fernen Endstellung befindet. Der plattenförmige Verschlußschieber 96 hat an seinem in Figur 1 linken Ende zwei Gabelarme 98, welche den Magnetkopf 18 umgreifen und an ihren freien Enden nach außen gerichtete Zapfen 100 haben, die in an der jeweiligen Gehäusehälfte 10 bzw. 12 ausgebildete Führungsnuten 102 eingreifen. Am entgegengesetzten Ende hat der Verschlußschieber 96 nach außen gerichtete Zapfen 104, die jeweils in eine in der jeweiligen Gehäusehälfte 10 bzw. 12 ausgebildete Führungsnut 106 eingreifen. An seiner Unterseite hat der Verschlußschieber eine Leiste 108, die zum Eingriff in nach oben offene Gabeln 110 an den Fortsätzen 58 des Schlittens 24 bestimmt ist. Wird der Schlitten 24 durch die Gewindespindel 44 entlang seiner Führung verstellt, nimmt er so den Verschlußschieber mit, der aufgrund der Gestaltung der Führungsnuten 102 und 106 unmittelbar nach Beginn der Verstellbewegung abgesenkt wird, sodaß der Magnetkopf 18 über den Verschlußschieber hinaus ragt und der Verschlußschieber unter eine nicht dargestellte Abdeckung tauchen kann, die den in Figur 1 rechten Abschnitt des Gehäuses 10, 12 überdeckt.

Die vorstehende Beschreibung zeigt, daß die gesamte Magnetkopfanordnung aus einer geringen Anzahl von Teilen besteht, die größtenteils als Kunststoffteile einstückig hergestellt werden können, auf einfache Weise praktisch ohne Werkzeuge montiert und demontiert werden können und nicht justiert zu werden brauchen. Dadurch werden die Herstellungskosten für die gesamte Anordnung erheblich gesenkt, ohne daß dies zu Lasten der Präzision und Zuverlässigkeit der Anordnung geht.

## Patentansprüche

1. Magnetkopfanordnung zum Abtasten eines auf einem ebenen Träger angeordneten Magnetstreifens, umfassend ein Gehäuse (10, 12) mit einer der abzutastenden Magnetstreifenfläche entsprechenden Öffnung, einen Schlitten (24), der in dem Gehäuse (10, 12) linear verstellbar geführt ist und an dem ein Magnetkopf (18) um zwei zueinander senkrechte Achsen schwenkbar gelagert ist, und einen Spindeltrieb (22) zum Verstellen des Schlittens entlang der Öffnung wobei der Schlitten einerseits an einer in dem Gehäuse (10, 12) parallel zur Spindel (44) gelagerten Führungsstange (34) geführt ist, dadurch **gekennzeichnet**, daß das Gehäuse (10, 12) in einer die Spindelachse enthaltenden und senkrecht zur Abtastfläche gerichteten Ebene in zwei jeweils einstückige Hälften (10, 12) unterteilt ist, in denen jeweils Lagerschalen (48) zur Lagerung des Spindeltriebes (22) ausgebildet sind, daß der mit der Spindel (44) in Gewindeeingriff stehende Schlitten (24) andererseits an einer an dem Gehäuse (10, 12) ausgebildeten Längsführung (42) geführt ist und daß der Magnetkopf (18) in einem Rahmen (86) befestigt ist, der an einer Schwinge (60) um eine erste Achse schwenkbar gelagert ist, wobei die Schwinge (60) um eine zur ersten Achse senkrechte zweite Achse an dem Schlitten (24) schwenkbar gelagert ist.

2. Magnetkopfanordnung nach Anspruch 1, dadurch **gekennzeichnet**, daß zur Führung des Schlittens (24) am Gehäuse (10, 12) dieses eine Führungsbahn (42) hat, an der mit dem Schlitten (24) verbundene Führungsnasen (40) geführt sind.

3. Magnetkopfanordnung nach Anspruch 1 oder 2, dadurch **gekennzeichnet**, daß der Schlitten (24) und die Schwinge (60) jeweils einstückige Kunststoffteile sind.

4. Magnetkopfanordnung nach einem der Ansprüche 1 bis 3, dadurch **gekennzeichnet**, daß der Magnetkopfrahmen (86) zwischen zwei Lagerschenkeln (74) der Schwinge (60) gelagert ist, wobei an dem Magnetkopfrahmen (86) oder den Lagerschenkeln (74) Lagerspitzen ausgebildet sind, die in am jeweils anderen Teil (74 oder 86) ausgebildete Vertiefungen eingreifen.

5. Magnetkopfanordnung nach Anspruch 4, dadurch **gekennzeichnet**, daß die Lagerschenkel (74) in Richtung auf den Magnetkopfrahmen (86) vorgespannt sind.

6. Magnetkopfanordnung nach einem der Ansprüche 1 bis 5, dadurch **gekennzeichnet**, daß die Schwinge (60) mit zwei Armen (62) zwischen zwei Schenkel (58) einer an dem Schlitten (24) ausgebildeten Lagergabel eingreift, wobei an den Armen (62) oder den Gabelschenkeln (58) Lagerspitzen (64) ausgebildet sind, die in an dem jeweils anderen Teil (58 oder 62) ausgebildete Vertiefungen (66) eingreifen.

7. Magnetkopfanordnung nach Anspruch 6, dadurch **gekennzeichnet**, daß die Arme (62) der Schwinge (60) in ihrer Eingriffstellung mit den Gabelschenkeln (58) vorgespannt sind.

8. Magnetkopfanordnung nach einem der Ansprüche 1 bis 7, dadurch **gekennzeichnet**, daß der Schwenkweg der Schwinge (60) durch Anschläge begrenzt ist und daß die Schwinge (60) in eine schlittenferne Stellung vorgespannt ist.

9. Magnetkopfanordnung nach einem der Ansprüche 1 bis 8, dadurch **gekennzeichnet**, daß die Schwenkachse der Schwinge (60) senkrecht zur Spindelachse gerichtet ist und daß an mindestens einer der parallel zur Spindelachse gerichteten Seiten der Schwinge (60) ein Führungsansatz (94) ausgebildet ist, der mit einem in einer der Gehäusehälften (10, 12) ausgebildeten Steuerkurve (92) zusammenwirkt derart, daß die Schwinge (60) bei der Verstellung des Schlittens (24) zu Beginn des Stellweges von dem Schlitten (24) weg und am Ende des Stellweges zum Schlitten hin geschwenkt wird.

10. Magnetkopfanordnung nach einem der Ansprüche 1 bis 9, dadurch **gekennzeichnet**, daß die Öffnung des Gehäuses (10, 12) durch einen Verschlußschieber (96) verschließbar ist, der mit dem Schlitten (24) gekoppelt ist.

11. Magnetkopfanordnung nach einem der Ansprüche 1 bis 10, dadurch **gekennzeichnet,** daß am Schlitten (24) zum Eingriff mit dem Spindelgewinde bestimmte Gewindestegabschnitte (46) ausgebildet sind, die sich jeweils über weniger als 180° erstrecken.

## Claims

1. Magnetic head arrangement for scanning a magnetic strip arranged on a flat substrate, comprising a housing (10, 12) with an opening corresponding to the magnetic strip surface to be scanned, a carriage (24) which is guided in a linearly adjustable fashion in the housing (10, 12) and on which a magnetic head (18) is mounted such that it can pivot about two mutually perpendicular axes, and a spindle drive (22) for adjusting the carriage along the opening, the carriage being guided on a guide rod (34) mounted in the housing (10, 12) parallel to the spindle (44), characterized in that in a plane including the spindle axis and directed perpendicular to the scanned surface the housing (10, 12) is subdivided into two respectively unipartite halves (10, 12) in which in each case bearing shells (48) for bearing the spindle drive (22) are constructed, in that the carriage (24), which engages with the spindle (44) in a threaded fashion, is guided on a longitudinal guide (42) constructed on the housing (10, 12), and in that the magnetic head (18) is fastened in a frame (86) which is mounted on a rocker (60) such that it can pivot about a first axis, the rocker (60) being mounted on the carriage (24) such that it can pivot about a second axis perpendicular to the first axis.

2. Magnetic head arrangement according to Claim 1, characterized in that for the purpose of guiding the carriage (24) on the housing (10, 12) the latter has a guide track (42) on which guide noses (40) connected to the carriage (24) are guided.

3. Magnetic head arrangement according to Claim 1 or 2, characterized in that the carriage (24) and the rocker (60) are unipartite plastic parts in each case.

4. Magnetic head arrangement according to one of Claims 1 to 3, characterized in that the magnetic head frame (86) is mounted between two bearing limbs (74) of the rocker (60), there being constructed on the magnetic head frame (86) or on the bearing limbs (74) bearing points which engage in depressions formed on the respective upper part (74 or 86).

5. Magnetic head arrangement according to Claim 4, characterized in that the bearing limbs (74) are preloaded in the direction of the magnetic head frame (86).

6. Magnetic head arrangement according to one of Claims 1 to 5, characterized in that the rocker (60) engages with two arms (62) between two limbs (58) of a bearing fork constructed on the carriage (24), there being constructed on the arms (62) or the fork limbs (58) bearing points (64) which engage in depressions (66) formed on the respective other part (58 or 62).

7. Magnetic head arrangement according to Claim 6, characterized in that the arms (62) of the rocker (60) are preloaded in their engaging position with the fork limbs (58).

8. Magnetic head arrangement according to one of Claims 1 to 7, characterized in that the pivoting travel of the rocker (60) is limited by stops, and in that the rocker (60) is preloaded into a position remote from the carriage.

9. Magnetic head arrangement according to one of Claims 1 to 8, characterized in that the pivoting axis of the rocker (60) is directed perpendicular to the spindle axis, and in that there is constructed on at least one of the sides of the rocker (60) which are directed parallel to the spindle axis a guide attachment (94) which cooperates with a cam path (92), which is constructed in one of the housing halves (10, 12), in such a way that the rocker (60) is pivoted away from the carriage (24) on shifting of the carriage (24) at the start of the travel and is pivoted towards the carriage at the end of the travel.

10. Magnetic head arrangement according to one of Claims 1 to 9, characterized in that the opening of the housing (10, 12) can be closed by a closure slide (96) which is coupled to the carriage (24).

11. Magnetic head arrangement according to one of Claims 1 to 10, characterized in that threaded web sections (46) which are intended for engaging with the spindle thread and each extend over less than 180° are constructed on the carriage (24).

## Revendications

1. Dispositif à tête magnétique pour la lecture d'une bande magnétique disposée sur un support plat, comprenant un boîtier (10, 12) pourvu d'une ouverture correspondant à la surface à balayer de la bande magnétique, un coulisseau (24), qui est guidé à déplacement linéaire dans le boîtier (10, 12) et sur lequel une tête (18) magnétique est montée à pivotement autour de deux axes mutuellement perpendiculaires, et un mécanisme (22) à broche pour déplacer le coulisseau, le coulisseau étant guidé d'une part le long de l'ouverture sur une tige (34) de guidage montée parallèlement à la broche (44) dans le boîtier (10, 12), **caractérisé** en ce que le boîtier (10, 12) est divisé, dans un plan contenant l'axe de la broche et orienté perpendiculairement à la surface balayée, en deux moitiés (10, 12) d'un seul tenant, dans lesquelles sont respectivement formés des coussinets (48) pour le montage du mécanisme (22) à broche, en ce que le coulisseau (24), qui engrène avec la broche (44), est guidé d'autre part sur une glissière (42) longitudinale formée sur le boîtier (10, 12), et en ce que la tête (18) magnétique est fixée dans un cadre (86) qui est monté à pivotement autour d'un premier axe sur une bielle (60) oscillante, la bielle (60) oscillante étant montée à pivotement sur le coulisseau (24) autour d'un deuxième axe perpendiculaire au premier axe.

2. Dispositif à tête magnétique suivant la revendication 1, **caractérisé** en ce que, pour le guidage du coulisseau (24) sur le boîtier (10, 12), ce dernier possède une voie (42) de guidage sur laquelle sont guidés des becs (40) de guidage assemblés au coulisseau (24).

3. Dispositif à tête magnétique suivant la revendication 1 ou 2, **caractérisé** en ce que le coulisseau (24) et la bielle (60) oscillante sont des pièces respectives d'un seul tenant en matière plastique.

4. Dispositif à tête magnétique suivant l'une des revendications 1 à 3, **caractérisé** en ce que le cadre (86) de tête magnétique est monté entre deux branches (74) de palier de la bielle (60) oscillante, des pointes de palier étant formées sur le cadre (86) de tête magnétique ou sur les branches (74) de palier, pointes qui pénètrent dans des renfoncements formés sur l'autre pièce (74 ou 86) respective.

5. Dispositif à tête magnétique suivant la revendication 4, **caractérisé** en ce que les branches (74) de palier sont précontraintes en direction du cadre (86) de tête magnétique.

6. Dispositif à tête magnétique suivant l'une des revendications 1 à 5, **caractérisé** en ce que la bielle (60) oscillante pénètre par deux bras (62) entre deux branches (58) d'une fourchette de palier formée sur le coulisseau (24), des pointes (64) de palier étant formées sur les bras (62) ou les branches (58) de la fourchette, pointes qui pénètrent dans des renfoncements (66) formés sur l'autre pièce (58 ou 62) respective.

7. Dispositif à tête magnétique suivant la revendication 6, **caractérisé** en ce que les bras (62) de la bielle (60) oscillante sont précontraints dans la position dans laquelle ils pénètrent entre les branches (58) de la fourchette.

8. Dispositif à tête magnétique suivant l'une des revendications 1 à 7, **caractérisé** en ce que la course de pivotement de la bielle (60) oscillante est limitée par des butées, et en ce que la bielle (60) oscillante est précontrainte dans une position éloignée du coulisseau.

9. Dispositif à tête magnétique suivant l'une des revendications 1 à 8, **caractérisé** en ce que l'axe de pivotement de la bielle (60) oscillante est orienté perpendiculairement à l'axe de la broche, et en ce qu'une saillie (94) de guidage est formée sur au moins un des côtés de la bielle (60) oscillante qui sont orientés parallèlement à l'axe de la broche, saillie qui coopère, avec une came (92) de commande formée dans une des moitiés (10, 12) de boîtier, de telle sorte que la bielle (60) oscillante est, lors du déplacement du coulisseau (24), éloignée du coulisseau (24) au début de la course de déplacement et rapprochée du coulisseau à la fin de la course de déplacement.

10. Dispositif à tête magnétique suivant l'une des revendications 1 à 9, **caractérisé** en ce que l'ouverture du boîtier (10, 12) peut être fermée par un tiroir (96) de fermeture qui est accouplé au coulisseau (24).

11. Dispositif à tête magnétique suivant l'une des revendications 1 à 10, **caractérisé** en ce que des parties (46) déterminées de nervures taraudées, qui sont destinées à engrener avec le filetage de la broche et qui s'étendent respectivement sur moins de 180°, sont formées sur le coulisseau (24).
